Europäisches Patentamt

European Patent Office

Office européen des brevets

(11) Numéro de publication: **0 119 915**
**A1**

(12) **DEMANDE DE BREVET EUROPEEN**

(21) Numéro de dépôt: **84400498.6**

(22) Date de dépôt: **12.03.84**

(51) Int. Cl.³: **G 21 C 1/02**

(30) Priorité: **16.03.83 FR 8304300**

(43) Date de publication de la demande: **26.09.84**
**Bulletin 84/39**

(84) Etats contractants désignés: **BE DE GB IT NL**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Sauvage, Michel, Parc Laurana Traverse Malakoff, F-13100 Aix en Provence (FR)**
Inventeur: **Renaux, Charley, "Les Extrees", F-13490 Jouques (FR)**

(74) Mandataire: **Mongrédien, André et al, c/o SOCIETE DE PROTECTION DES INVENTIONS 25, rue de Ponthieu, F-75008 Paris (FR)**

(54) **Réacteur nucléaire à neutrons rapides de type intégré.**

㋔ L'invention concerne un réacteur nucléaire à neutrons rapides de type intégré.

Le collecteur froid (24b) recueillant le sodium sortant des échangeurs (20) afin que celui-ci soit refoulé dans le coeur (16) par les pompes (22) comprend des modules (32) fermés et séparés, disposés bout à bout pour former un anneau entourant le coeur. Au moins une pompe (22) et au moins un échangeur (20) plongent dans chaque module par une cheminée (36, 34) assurant l'étanchéité entre les collecteurs chaud (24a) et froid (24b).

Application à la réalisation de réacteurs nucléaires à neutrons rapides perfectionnés.

EP 0 119 915 A1

ACTORUM AG

Réacteur nucléaire à neutrons rapides de type intégré.

La présente invention concerne un réacteur nucléaire à neutrons rapides de type intégré, dans lequel les structures internes sont modifiées, notamment afin d'améliorer leur tenue aux séismes et de réduire le coût du réacteur.

On sait que les réacteurs à neutrons rapides de type intégré se caractérisent par le fait que l'ensemble du circuit primaire du réacteur est logé à l'intérieur d'une cuve dite cuve principale, obturée par une dalle. Ainsi, on trouve à l'intérieur de la cuve principale le coeur du réacteur, les pompes du circuit primaire et les échangeurs assurant le transfert de la chaleur entre le circuit primaire et le circuit secondaire, l'ensemble étant noyé dans un métal liquide généralement constitué par du sodium, surplombé à proximité de la dalle par une couverture d'un gaz inerte tel que de l'argon.

Dans les réacteurs de ce type, il est nécessaire de séparer le sodium relativement chaud sortant du coeur du réacteur, du sodium relativement froid sortant des échangeurs de chaleur. On définit ainsi à l'intérieur de la cuve principale un collecteur chaud contenant le sodium relativement chaud et un collecteur froid contenant le sodium relativement froid. De façon plus précise, en sortant du coeur du réacteur, le sodium pénètre directement dans le collecteur chaud avant d'être admis dans les échangeurs. Le sodium refroidi à l'intérieur de ces derniers est rejeté dans le collecteur froid, où il est repris par les pompes et réinjecté dans le coeur par des conduites de refoulement communiquant avec un sommier d'alimentation et de supportage du coeur.

Dans les réacteurs réalisés ou en cours de fabrication à ce jour, tels que les réacteurs Phénix et Super-Phénix, la séparation entre les collecteurs chaud et froid est réalisée au moyen d'une cuve interne dite "à redan" comportant une virole cylindrique et une partie en forme de redan reliant cette virole cylindrique aux structures extérieures du coeur. Cette partie de la cuve en forme de redan est traversée par les pompes et les échangeurs, qui sont suspendus à la dalle.

Bien qu'elles donnent des résultats satisfaisants du point de vue du fonctionnement du réacteur, les structures internes des réacteurs intégrés tels que Phénix et Super-Phénix présentent un certain nombre d'inconvénients.

En premier lieu, il est nécessaire de protéger la cuve principale des contraintes thermiques excessives en la doublant de baffles thermiques. Les structures internes sont donc très complexes et, par conséquent, très coûteuses, notamment en raison de la masse importante d'acier inoxydable de qualité nucléaire requise pour sa réalisation et en raison des formes complexes des différentes pièces.

Dans les réacteurs existants, le transfert des assemblages combustibles neufs et irradiés entre la cuve principale et des installations de stockage annexes s'effectue notamment à l'intérieur de la cuve principale au moyen d'une rampe inclinée. De même, d'autres composants tels que des échangeurs de refroidissement du réacteur à l'arrêt sont suspendus à la dalle et traversent la cuve interne. Ces nombreuses traversées de la cuve interne en compliquent encore la forme et, tendent donc à en accroître le coût.

D'autre part, la cuve interne à redan est fixée à la cuve principale par sa partie inférieure cylindrique, qui est reliée aux structures de supportage du coeur (sommier et platelage), elles-mêmes fixées à la cuve principale. Cette double liaison entre la cuve interne et la cuve principale a pour conséquence d'induire des contraintes thermiques préjudiciables à la bonne tenue mécanique de ces structures.

Un autre inconvénient des structures actuelles provient du fait que l'élancement de la cuve interne, c'est-à-dire le rapport de l'épaisseur de la paroi sur sa hauteur, est très faible. Cette caractéristique est défavorable du point de vue de la résistance des structures internes aux séismes. Afin d'améliorer cette résistance aux séismes, il est nécessaire de raidir ces structures soit localement, au moyen de cerces ou de renforts, soit sur toute la hauteur de la cuve interne, en augmentant son épaisseur. Dans les deux cas, la masse d'acier inoxydable de qualité nucléaire et, par conséquent, le coût du réacteur, s'en trouvent sensiblement augmentés.

Par ailleurs, en raison de la réalisation du collecteur froid sous la forme d'un volume unique, tout incident sur les boucles du circuit secondaire se répercute sur la totalité du collecteur froid.

La présente invention a précisément pour objet un réacteur nucléaire à neutrons rapides de type intégré comprenant des structures internes de forme modifiée permettant de résoudre les inconvénients mentionnés ci-dessus des structures internes des réacteurs existants ou en cours de fabrication.

A cet effet, et conformément à l'invention, il est proposé un réacteur nucléaire à neutrons rapides, comprenant une cuve principale obturée par une dalle et dans laquelle est disposé le coeur du réacteur, ladite cuve contenant un métal liquide circulant entre un collecteur chaud et un collecteur froid sous l'action d'au moins deux pompes pour transférer la chaleur dégagée dans le coeur du réacteur jusqu'à au moins deux échangeurs de chaleur, caractérisé en ce que le collecteur froid comporte plusieurs modules fermés et séparés disposés bout à bout pour former un anneau entourant le coeur du réacteur, au moins une pompe et au moins un échangeur de chaleur plongeant dans chacun desdits modules au travers de cheminées assurant l'étanchéité entre les collecteurs chaud et froid.

Grâce à la disposition en module et sous forme d'anneau du collecteur froid autour du coeur du réacteur et au supportage des modules par le fond de la cuve principale, la réalisation des structures internes se trouve simplifiée. En particulier, la rampe de manutention ainsi que certains des composants peuvent passer entre deux modules, ce qui permet de limiter les dimensions de la cuve principale. Le coût du réacteur s'en trouve sensiblement réduit.

Par ailleurs, les problèmes liés aux dilatations différentielles lors des transitoires thermiques affectant l'un des composants ou l'une des boucles secondaires, ne se répercutent que sur le module correspondant. En outre, la réduction de la hauteur du collecteur froid entraîne une plus grande résistance de ces structures aux séismes et une diminution sensible du coût.

Conformément à une autre caractéristique de l'invention, chaque module du collecteur froid repose sur le fond de la cuve principale par l'intermédiaire d'une structure de supportage appropriée.

Selon un mode de réalisation de l'invention, chaque module présente en section droite une forme approximativement circulaire, de sorte que le collecteur froid présente la forme d'un tore de révolution fractionné en modules.

Comme on l'a mentionné précédemment, lorsque le réacteur comprend une rampe de manutention de combustible, cette rampe passe de préférence entre deux modules voisins du collecteur froid.

Dans un mode de réalisation particulier de l'invention, les cheminées dans lesquelles sont logées les pompes sont ouvertes à leur extrémité supérieure, située au-dessus du niveau libre de métal liquide dans la cuve principale, et les cheminées dans lesquelles sont logés les échangeurs coopèrent avec ces derniers par l'intermédiaire d'un dispositif d'étanchéité situé en-dessous d'au moins un orifice d'entrée du métal liquide contenu dans le collecteur chaud.

Un baffle horizontal disposé au-dessus des modules, mais au-dessous du niveau haut du coeur permet d'éviter la convection entre le sodium situé au niveau du collecteur froid et le sodium, à une température plus élevée, situé au-dessus du coeur.

On décrira maintenant, à titre d'exemple non limitatif, un mode de réalisation préféré de l'invention en se référant aux dessins annexés dans lesquels :

- la figure 1 est une vue en coupe schématique du circuit primaire intégré d'un réacteur à neutrons rapides réalisé conformément à l'invention, et
- la figure 2 représente de façon très schématique la section selon la ligne II-II de la figure 1 du réacteur selon l'invention.

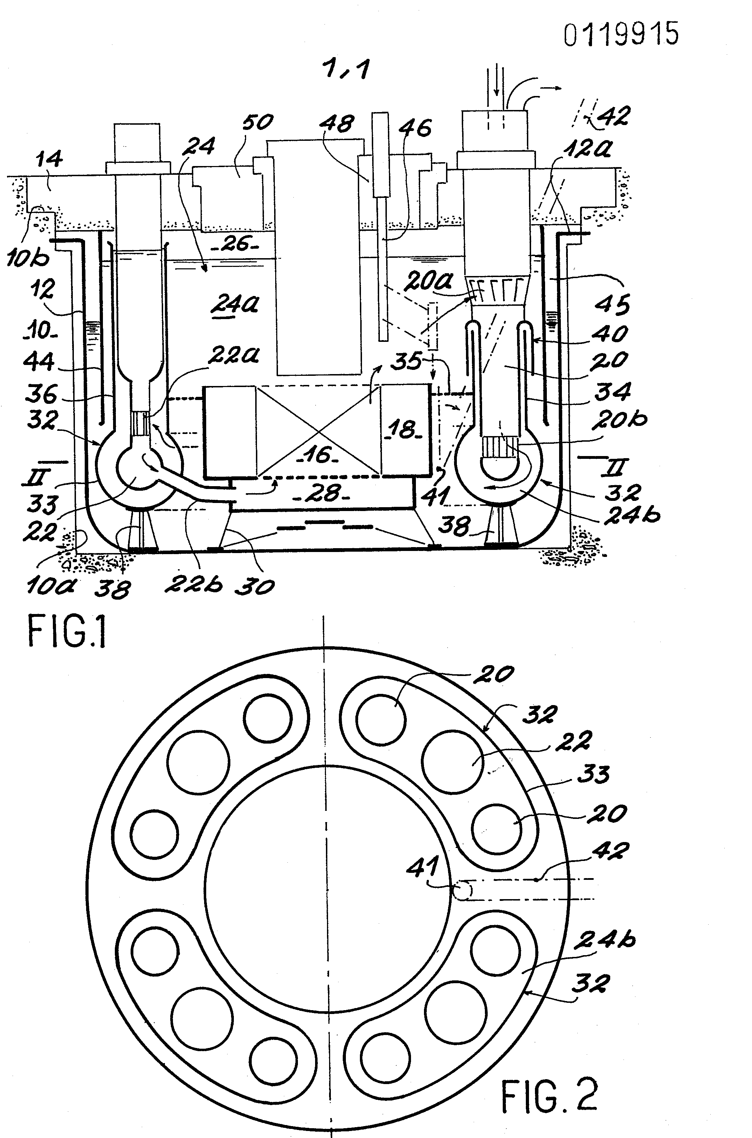

De façon connue, le bloc réacteur représenté sur la figure 1 comprend une enceinte externe de béton 10 assurant la protection neutronique. Cette enceinte 10 définit un puits de cuve 10a dans lequel est disposée une cuve cylindrique 12, d'axe vertical, dite cuve principale. Le puits de cuve dans lequel est logée la cuve principale 12 est obturé à son extrémité supérieure par une dalle de béton 14 reposant de façon connue sur une portée annulaire 10b formée sur l'enceinte 10.

Le supportage de la cuve principale 12 peut être réalisé de différentes manières. Ainsi, dans la variante représentée sur la figure 1, le fond de la cuve repose directement sur le fond du puits de cuve défini dans l'enceinte 10. De plus, la cuve 12 comporte à son extrémité supérieure une bride relativement souple 12a dont la périphérie externe est noyée dans le béton de l'enceinte 10. De façon traditionnelle, la cuve 12 pourrait aussi être suspendue directement à la dalle de fermeture 14.

Le réacteur selon l'invention étant du type intégré, on trouve de façon connue à l'intérieur de la cuve principale 12 le coeur 16 du réacteur, sa protection neutronique 18, des échangeurs de chaleur 20 et des pompes de circulation 22. L'ensemble est noyé dans du sodium liquide 24 surplombé à proximité de la dalle 14 par une couverture 26 de gaz neutre tel que de l'argon.

De façon plus précise, le coeur 16, entouré de sa protection neutronique 18, est disposé approximativement au centre de la cuve 12 et repose sur le fond de celle-ci par l'intermédiaire d'un sommier d'alimentation 28 et d'un platelage 30. Les échangeurs 20 et les pompes 22 sont suspendus de façon connue à la dalle de fermeture 14 et régulièrement répartis dans l'espace annulaire formé entre la protection neutronique 18 et la paroi latérale cylindrique de la cuve 12. Ainsi, comme l'illustre la figure 2, les axes des échangeurs 20 et des pompes 22 sont disposés sensiblement à égale distance de l'axe vertical de la cuve principale 12.

Le réacteur nucléaire selon l'invention comprend au moins deux échangeurs 20 et au moins deux

B 7733.3 GP

pompes 22 logés dans la cuve principale 12. Par exemple, dans la variante de réalisation représentée sur la figure 2, il est prévu quatre pompes 22 disposées sensiblement à égale distance les unes des autres dans l'espace annulaire entourant le coeur du réacteur. Dans cette variante de réalisation, on prévoit en outre d'associer à chacune des pompes 22 deux échangeurs 20 disposés de part et d'autre de la pompe correspondante.

Conformément à l'invention, chacun des groupes échangeur 20 -pompes 22 ainsi formés plonge dans un module fermé 32 par des cheminées désignées respectivement par les références 34 et 36.

De façon plus précise et comme l'illustrent les figures 1 et 2, chacun des modules 32 est délimité par une paroi 33 remplissant la même fonction que la cuve interne dans les réacteurs de la technique antérieure. Dans la variante représentée, cette paroi présente, pour chaque module, la forme d'un secteur torique de révolution dont les extrémités sont hémisphériques. Toutefois, la paroi délimitant chaque module pourrait être de forme légèrement différente sans sortir du cadre de l'invention. Ainsi, chaque module peut présenter en section une forme non circulaire, et ses extrémités peuvent ne pas être hémisphériques. Les modules 32 présentent alors la forme de secteurs d'anneaux.

De plus, comme l'illustre la figure 2, les modules 32 sont disposés bout à bout dans l'espace annulaire défini entre la protection neutronique 18 et la paroi verticale de la cuve 12 et séparés les uns des autres.

Comme l'illustre la figure 1, les modules 32 sont disposés au niveau de l'extrémité inférieure du coeur et reposent sur le fond de la cuve 12 par l'intermédiaire de structures de supportage 38.

Les cheminées 36 par lesquelles les pompes 22 plongent dans les modules 32 sont fixées de façon étanche, par exemple par soudage, à la paroi du module correspondant et elles se prolongent vers le haut au-delà du niveau libre de sodium 24, en tenant compte des variations de ce niveau résultant des changements de régime des pompes.

Les cheminées 34 par lesquelles les échangeurs 20 plongent dans les modules 32 sont également fixées de façon étanche à ces derniers par exemple par soudage. Ces cheminées 34 s'élèvent à un niveau inférieur à celui du niveau libre de sodium liquide 24 et, de façon plus précise, à un niveau inférieur à celui des orifices d'entrée 20a des échangeurs. L'étanchéité entre le sodium chaud disposé à l'extérieur des cheminées 34 et le sodium froid situé à l'intérieur de celles-ci est réalisée par exemple au moyen de joints à cloche d'argon 40 formés entre les bords supérieurs des cheminées et les échangeurs 20.

A l'exception du sodium contenu dans les modules 32 et dans les cheminées 34 et 36, l'ensemble du sodium 24 qui se trouve dans la cuve principale 12 est à une température relativement chaude, de telle sorte que l'espace ainsi défini constitue le collecteur chaud 24a. A l'inverse, l'espace défini à l'intérieur des modules 32 et des cheminées 34 et 36 contient le sodium relativement froid sortant des échangeurs et constitue donc le collecteur froid 24b.

La partie inférieure du collecteur chaud 24a dans laquelle baignent les modules 32, est à une température voisine de celle du collecteur froid si toute convection du sodium peut être évitée dans cette zone. Cependant, un baffle horizontal 35 disposé au-dessus des modules mais au-dessous du niveau haut du coeur peut s'avérer nécessaire.

Afin d'assurer la circulation du sodium liquide entre ces deux collecteurs, au travers du coeur 16 du réacteur et au travers des échangeurs 20, les pompes 22 comportent de façon connue des orifices d'aspiration 22a situés dans le collecteur froid 24b et des orifices de refoulement communiquant avec le sommier 28 d'alimentation du coeur par des conduites de refoulement 22b traversant de manière étanche la paroi 33 des modules 32.

Comme on l'a vu précédemment, les échangeurs 20 comportent des orifices d'entrée 20a communiquant avec le collecteur chaud 24a. Ils comportent aussi des orifices de sortie 20b qui débouchent dans le collecteur froid 24b. Lors du fonctionnement du réacteur, le sodium liquide 24 traverse le coeur du réacteur de bas en haut en évacuant la chaleur dégagée par les éléments combustibles. Le sodium ainsi réchauffé est admis dans le collecteur chaud 24a, puis pénètre dans les échangeurs 20 par les orifices 20a. Il transmet ainsi une partie de la chaleur qu'il véhicule au métal liquide (généralement du sodium) circulant dans le circuit secondaire. Le sodium primaire ainsi refroidi sort des échangeurs par les orifices 20b à l'intérieur de chacun des modules 32 du collecteur froid 24b. Le sodium relativement froid admis dans chacun des modules est repris par la ou les pompes 22 qui plongent dans ce module au travers des orifices d'aspiration 22a, pour être refoulé dans le coeur 16 par les conduites 22b et le sommier 28.

Grâce à la structure généralement annulaire ou torique du collecteur froid, l'invention permet de simplifier sensiblement les structures internes du réacteur. De même, la forme du collecteur froid présente une meilleure tenue aux séismes que des viroles de faible épaisseur et de grande hauteur qui délimi-

B 7733.3 GP

tent habituellement les collecteurs chaud et froid. En outre, le supportage du collecteur froid par la cuve principale et la réalisation de ce collecteur sous la forme de modules séparés permet de résoudre de façon simple les problèmes liés à la dilatation différentielle qui se produit lors des phases transitoires du fonctionnement du réacteur.

Comme on l'a représenté schématiquement en traits mixtes sur les figures 1 et 2, la structure modulaire du collecteur froid permet également d'implanter facilement le poste 41 de chargement et de déchargement des assemblages du réacteur (:PCDR) et de faire passer avantageusement une rampe de manutention inclinée 42 entre les extrémités de deux modules voisins. On rappelle qu'une telle rampe est prévue dans ce type de réacteur pour permettre d'amener des assemblages neufs jusqu'au PCDR 41 et d'en évacuer les assemblages irradiés. La manutention des assemblages entre le coeur et le PCDR 41 est réalisée au moyen d'un bras de manutention 46 et/ou d'un ringard supporté éventuellement par un petit bouchon tournant 48, lui-même monté dans un grand bouchon tournant 50 supporté par la dalle 14. De plus, cette disposition permet de rapprocher le PCDR 41 le plus possible du coeur, autorisant une réduction du diamètre de la cuve principale. Le coût du réacteur s'en trouve ainsi sensiblement réduit.

Bien entendu, d'autres composants (non représentés) peuvent avantageusement être disposés entre les modules 32. Ainsi, les échangeurs de refroidissement du réacteur à l'arrêt, ainsi que les appareils de purification du sodium peuvent être placés entre les extrémités des modules 32.

Comme on l'a représenté sur la figure 1, afin de réduire les contraintes thermiques au niveau de la partie supérieure de la cuve principale 12, on peut prévoir de doubler celle-ci intérieurement par un baffle 44 plongeant dans la cuve à partir de la dalle 14, approximativement jusqu'au niveau de l'extrémité supérieure des modules 32. Ce baffle protège la paroi de la cuve 12 des transitoires thermiques en provenance du coeur du réacteur. L'espace annulaire 45 défini entre la cuve 12 et le baffle 44 peut, si nécessaire, être rempli en gaz afin de limiter le niveau de température de la cuve 12 et étaler le gradient de température, dans la paroi de la cuve 12, entre le niveau de sodium dans l'espace 45 et la partie haute de la cuve 12.

Bien entendu, l'invention n'est pas limitée au mode de réalisation qui vient d'être décrit à titre d'exemple, mais en couvre toutes les variantes. On a vu notamment que la cuve principale 12 peut être soit posée, soit suspendue. De même, la section droite des modules 32 peut ne pas être circulaire et le nombre de modules ainsi que le nombre de composants plongeant dans chacun d'entre eux peuvent être modifiés selon les caractéristiques du réacteur.

12

REVENDICATIONS

1. Réacteur nucléaire à neutrons rapides, comprenant une cuve principale (12) obturée par une dalle (14) et dans laquelle est disposé le coeur (16) du réacteur, ladite cuve contenant un métal liquide (24) circulant entre un collecteur chaud (24a) et un collecteur froid (24b) sous l'action d'au moins deux pompes (22), pour transférer la chaleur dégagée dans le coeur du réacteur jusqu'à au moins deux échangeurs de chaleur (20), caractérisé en ce que le collecteur froid (24b) comporte plusieurs modules (32) fermés et séparés disposés bout à bout pour former un anneau entourant le coeur du réacteur, au moins une pompe (22) et au moins un échangeur de chaleur (20) plongeant dans chacun desdits modules au travers de cheminées (36, 34) assurant l'étanchéité entre les collecteurs chaud et froid.

2. Réacteur selon la revendication 1, caractérisé en ce que chaque module (32) du collecteur froid repose sur le fond de la cuve principale (12) par l'intermédiaire d'une structure de supportage appropriée (38).

3. Réacteur selon l'une quelconque des revendications 1 et 2, caractérisé en ce que chaque module (32) présente en section droite une forme approximativement circulaire.

4. Réacteur selon l'une quelconque des revendications 1 à 3, caractérisé en ce qu'il comprend un poste (41) de chargement et de déchargement des assemblages du réacteur et une rampe (42) de manutention des assemblages qui passent entre deux modules voisins (32) du collecteur froid.

5. Réacteur selon l'une quelconque des revendications 1 à 4, caractérisé en ce qu'une pompe (22) et deux échangeurs (20) plongent dans chacun des modules (32).

6. Réacteur selon l'une quelconque des revendications 1 à 5, caractérisé en ce que les cheminées (36) dans lesquelles sont logées les pompes (22) sont ouvertes à leur extrémité supérieure, située au-dessus du niveau libre de métal liquide (24) dans la cuve principale.

7. Réacteur selon l'une quelconque des revendications 1 à 6, caractérisé en ce que les cheminées (34) dans lesquelles sont logés les échangeurs (20) coopèrent avec ces derniers par l'intermédiaire d'un dispositif d'étanchéité (40) situé en-dessous d'au moins un orifice d'entrée (20a) du métal liquide contenu dans le collecteur chaud.

8. Réacteur selon l'une quelconque des revendications 1à 7, caractérisé en ce qu'il comprend un baffle horizontal (35) disposé dans le collecteur chaud au-dessus des modules (32) et en-dessous du niveau haut du coeur.

FIG.1

FIG. 2

0119915

0119915

Numéro de la demande

Office européen
des brevets

RAPPORT DE RECHERCHE EUROPEENNE

EP 84 40 0498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-2 841 545  (W.H. ZINN) <br> * Colonne 13, lignes 1-17; figures 1,3,4 * | 1,2 | G 21 C   1/02 |
| A | FR-A-2 180 517  (C.E.A. CREUSOT LOIRE) <br> * Page 3, lignes 7-37; figure 2 * | 1,2 | |
| A | FR-A-2 220 847  (C.E.A. CREUSOT LOIRE) <br> * Page 6, lignes 6-22; figure 2 * | 4 | |
| A | US-A-4 302 296  (SHARBAUGH et al.) <br> * Colonne 4, lignes 37-68; figure 1 * | 8 | |
| A | EP-A-0 091 872  (NOVATOME) | | |

DOMAINES TECHNIQUES
RECHERCHES (Int. Cl. 3)

G 21 C   1/00
G 21 C  15/00

Le présent rapport de recherche a été établi pour toutes les revendications

| Lieu de la recherche <br> LA HAYE | Date d'achèvement de la recherche <br> 19-06-1984 | Examinateur <br> GIANNI G.L.G. |
|---|---|---|